# EUROPEAN PATENT SPECIFICATION

(11) **EP 2 466 434 B1**
(45) Date of publication and mention of the grant of the patent: **30.05.2018**
(21) Application number: 10193487.5
(22) Date of filing: 02.12.2010
(51) Int. Cl.: G06F 3/0488, G06F 3/0484

(54) **Portable electronic device and method of controlling same**
Tragbare elektronische Vorrichtung und Kontrollverfahren dafür
Dispositif électronique portable et son procédé de commande

(43) Date of publication of application: 20.06.2012
(73) Proprietor: BlackBerry Limited, Waterloo, ON N2K 0A7 (CA)
(72) Inventor: Hymel, James Allen, Waterloo Ontario N2L 5Z5 (CA)
(74) Representative: Hibbert, Juliet Jane Grace

(56) References cited:
- EP-A2- 2 163 975
- US-A1- 2004 140 956
- US-A1- 2006 232 551
- US-A1- 2006 288 314
- MCGUFFIN M J ET AL: "Fitts' Law and Expanding Targets: Experimental Studies and Designs for User Interfaces", ACM TRANSACTIONS ON COMPUTER-HUMAN INTERACTION, ACM, NEW YORK, NY, US, vol. 12, no. 4, 1 December 2005 (2005-12-01), pages 388-422, XP002603487, ISSN: 1073-0516

## Description

### FIELD OF TECHNOLOGY

The present disclosure relates to a portable electronic device including a touch screen display and control of the electronic device.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

EP2163975 relates to a method for selecting a key from a plurality of selectable keys displayed on a touch-sensitive display of a portable electronic device. The method comprises detecting the direction of a finger moving on the touch screen display, and enlarging the key size of keys having a high possibility of being touched, such as keys positioned in the finger-moving direction.

US 2006/0232551 discloses an electronic apparatus that includes a display that displays a cursor and keys that constitutes a soft keyboard and a cursor control device for controlling movement of the cursor on the display. The electronic apparatus also includes a processor operable to receive a cursor control signal representing movement of the cursor on the display from the cursor control device. In response to the cursor control signal, the processor predicts one of the keys likely to be next selected as the target key and enlarges the target key relative to other keys on the display.

MCGUFFIN M J et al. "Fitts' Law and Expanding Targets: Experimental Studies and Designs for User Interfaces", ACM TRANSACTIONS ON COMPUTER-HUMAN INTERACTION, ACM, NEW YORK, NY, US, vol. 12, no. 4, 1 December 2005, pages 388-42, XP002603487, ISSN: 1073-0516 discloses a method for facilitating the selection user-interface widgets or other on-screen targets with a point device that includes users select a single, isolated target button that expands just before it is selected.

US patent application no. US2004/0140956 describes a continuous stroke word-based text input system that allows the use of a small on-screen keyboard to quickly enter words by drawing a continuous line that passes through or near the keys of each letter in a word in sequence without lifting the stylus. The user traces an input pattern for a word by contacting the keyboard on or near the key of the first letter of the word, then tracing through each letter in sequence, lifting the stylus from the screen upon reaching the last letter.

US patent application no. US2004/140956 describes a portable electronic device designed to utilize only a touch-screen for text input, generally using some form of stylus to contact the screen. The Continuous Stroke Word-Based Text Input System allows someone to use a small on-screen keyboard to quickly enter words by drawing a continuous line that passes through or near the keys of each letter in a word in sequence without lifting the stylus. The user traces an input pattern for a word by contacting the keyboard on or near the key of the first letter of the word, then tracing through each letter in sequence, lifting the stylus from the screen upon reaching the last letter.

US2006/0288314 relates to a method for selecting a target object from a plurality of displayed objects. The method comprises automatically moving a displayed cursor to the target object that is selected based on the calculated direction/movement vector of the cursor, wherein any display objects within a threshold distance from a projection of the movement vector of the cursor are considered potential target object.

Improvements in electronic devices with touch-sensitive or touchscreen devices are desirable.

### SUMMARY

According to one aspect of the present invention, there is provided a method as claimed in appended claim 1.

According to another aspect of the present invention, there is provided a computer-readable medium as claimed in appended claim 8.

According to another aspect of the present invention, there is provided a portable electronic device as claimed in appended claim 9.

### BRIEF DESCRIPTION OF THE DRAWINGS

Embodiments of the present disclosure will now be described, by way of example only, with reference to the attached figures, wherein:
FIG. 1 is a block diagram of an example of a portable electronic device in accordance with the present disclosure;
FIG. 2 is a flowchart illustrating an embodiment of a method of facilitating selection of a selectable feature displayed on a touch-sensitive display of a portable electronic device in accordance with the present disclosure;
FIG. 3 through FIG. 6 show examples of a touch-sensitive display illustrating selectable features according to one example of the method of FIG. 2;
FIG. 7 shows an example of a touch-sensitive display illustrating selectable features according to another example of the method of FIG. 2;
FIG. 8 and FIG. 9 show examples of a touch-sensitive display illustrating selectable features according to another example of the method FIG. 2; and
FIG. 10 and FIG. 11 show examples of a touch-sensitive display illustrating selectable features according to yet another example of the method FIG. 2.

### DETAILED DESCRIPTION

The following describes a portable electronic device and a method that includes displaying one or more selectable features on a touch-sensitive display of the portable electronic device, detecting a gesture on the touch-sensitive display, identifying at least one of the selectable features based on a direction of the gesture, and increasing a size of the at least one of the selectable features.

For simplicity and clarity of illustration, reference numerals may be repeated among the figures to indicate corresponding or analogous elements. Numerous details are set forth to provide an understanding of the embodiments described herein. The embodiments may be practiced without these details. In other instances; well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, tablet computers, and so forth. The portable electronic device may also be a portable electronic device without wireless communication capabilities, such as a handheld electronic game device, digital photograph album, digital camera, or other device.

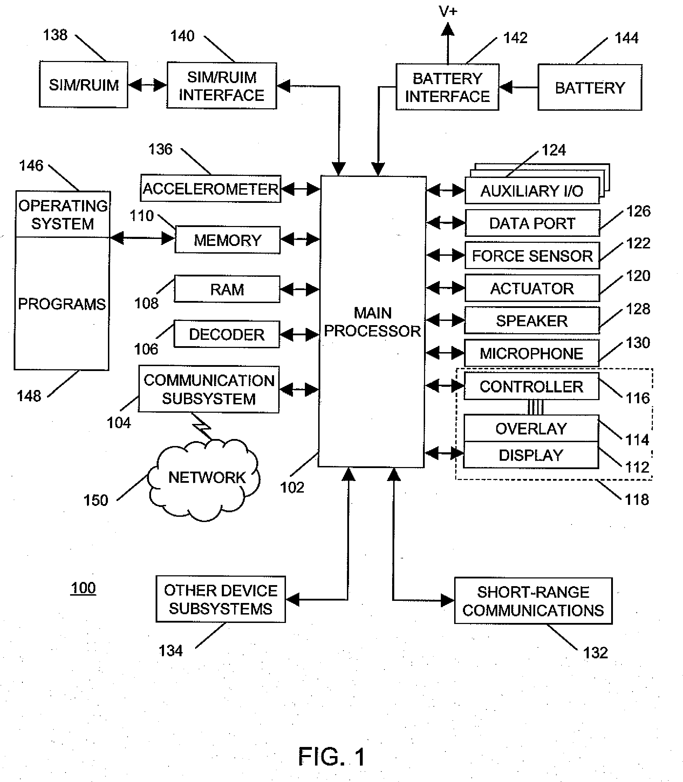

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, an auxiliary input/output (I/O) subsystem 124, a data port 126, a speaker 128, a microphone 130, short-range communications 132, and other device subsystems 134. The processor 102 may optionally interact with one or more actuators 120 and one or more force sensors 122. Interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display may include a capacitive touch-sensitive overlay 114. The overlay 114 may be an assembly of multiple layers in a stack inclyding, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x and y components may be determined by signals generated from the touch-sensor layers, also referred to as touch sensors. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

The touch-sensitive display 118 is also configured to detect a gesture. A gesture, such as a swipe, is a type of touch, that begins at an origin point and continues to a finishing point while touch contact is maintained. A swipe may be long or short in distance, or duration, or both distance and duration. Two points of the swipe may be utilized to determine a vector that describes a direction of the swipe. The direction may be referenced with respect to the touch-sensitive display 118, the orientation of the information displayed on the touch-sensitive display 118, or another reference. The origin point and the finishing point of the swipe may be utilized to determine the magnitude or distance of the swipe. The processor 102 receives data from the controller 116 to determine the direction, magnitude, and duration of the swipe.

The optional actuator 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback.

A mechanical dome switch actuator may be utilized. In this example, tactile feedback is provided when the dome collapses due to imparted force and when the dome returns to the rest position after release of the switch.

Alternatively, the actuator 120 may comprise one or more piezoelectric (piezo) actuators that provide tactile feedback for the touch-sensitive display 118. Contraction of the piezo actuator(s) applies a spring-like force, for example, opposing a force externally applied to the touch-sensitive display 118. Each piezo actuator includes a piezoelectric device, such as a piezoelectric disk, adhered to a substrate such as a metal substrate. The substrate bends when the piezoelectric device contracts due to build up of charge/voltage at the piezoelectric device or in response to a force, such as an external force applied to the touch-sensitive display 118. The charge/voltage may be adjusted by varying the applied voltage or current, thereby controlling the force applied by the piezo actuators. The charge/voltage at the piezo actuator may be removed by a controlled discharge current that causes the piezoelectric device to expand, decreasing, the force applied by the piezo actuators. The charge/voltage may be removed over a relatively short period of time to provide tactile feedback to the user. Absent an external force and absent a charge/voltage at the piezo actuator, the piezo actuator may be slightly bent due to a mechanical preload.

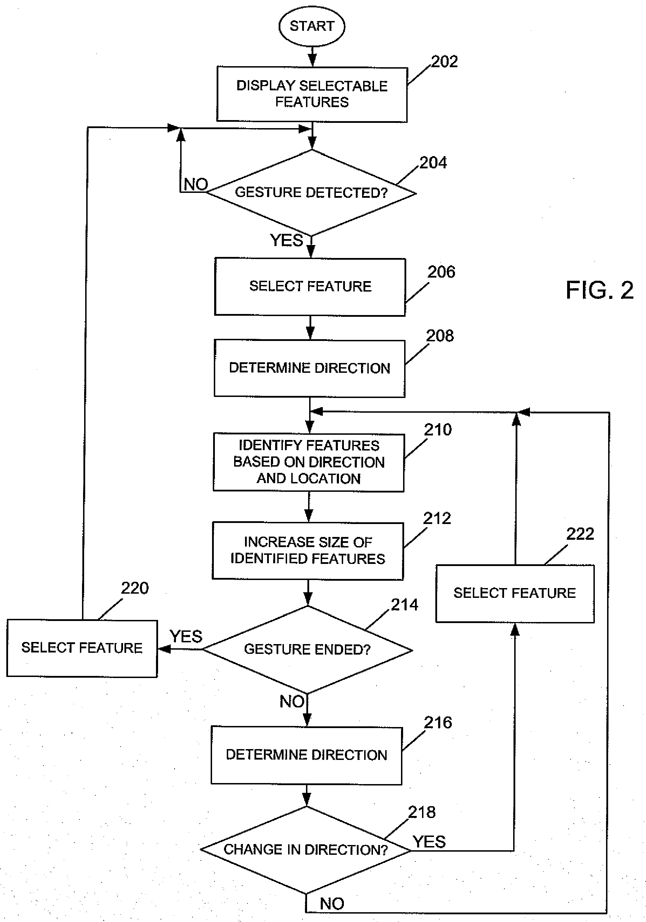

FIG. 2 is a flowchart illustrating an example of a method of facilitating selection of a selectable feature displayed on a touch-sensitive display of a portable electronic device in accordance with the present disclosure. The method may be carried out by software executed by, for example, the processor 102. Coding of software for carrying out such a method is within the scope of a person of ordinary skill in the art given the present description. The method may contain additional or fewer processes than shown and described, and may be performed in a different order. Computer-readable code executable by, for example, the processor 102 of the portable electronic device 100 to perform the method, may be stored in a computer-readable medium.

When a user selects features with a finger or thumb, the user may select each feature by touching the touch-sensitive display at a location corresponding to the displayed feature. With the small size of portable electronic devices, a user's thumb or finger may cover part or all of a selectable feature. For example, when typing on a virtual keyboard, a user's thumb may cover keys of the keyboard making selection difficult. Using a swipe method, a user may select multiple keys by moving from key to key without lifting the finger or thumb. Utilizing this method, a user's hand or thumb may cover keys of the keyboard, again making accurate selection of keys difficult.

Selectable features are displayed on the touch-sensitive display 118 at 202. When a gesture is detected at 204, the selectable feature associated with the location at which the gesture originates is selected at 206. A direction of the gesture, also referred to herein as the touch, is determined while the gesture is detected and is ongoing at 208. To determine the direction of the gesture, two points along the path of the gesture are utilized to determine a vector that describes the direction. Based on the location of the touch at the time the direction of the gesture is determined and based on the direction, selectable features that are displayed on the touch-sensitive display 118 are identified at 210. The selectable features identified may be features that lie in the direction of the gesture, beginning at the location of the touch at the time the direction is determined. Features that are located behind the location of the touch at the time the direction is determined, or in the opposite direction, are not identified. The selectable features that are identified may include, for example, all features that lie in the direction of the gesture determined at 208. Alternatively, the selectable features identified may include features that are within some distance of a line in the direction determined at 208. The determined distance may be predetermined or preset. Alternatively, the distance may be dependent on the area of contact of the finger or thumb with the touch-sensitive display 118, when an area of a touch is determined.

The size of the identified features is increased at 212. The size of the identified features may be increased by increasing a displayed size of the features as well as a target size of the features. The target is the area of the touch-sensitive display 118 that is associated with the displayed feature such that when a touch is located within the area at the time of selection, the associated feature is selected. The target areas and the displayed size of the features may differ. Alternatively, the size of the identified features may be increased without increasing the target size. According to still another alternative, the target size of the identified features may be increased without increasing the displayed size of the identified features. The remaining selectable features that are not identified at 210 are displayed at their default size(s).

When the gesture ends at 214, the selectable feature at which the touch was located immediately prior to the gesture ending, is selected at 220. Touch detection is repeatedly determined at regular intervals in time and the gesture is determined to have ended when the gesture, or touch, is no longer detected on the touch-sensitive display 118.

When the gesture has not ended, the direction of the gesture is determined again at 216. To determine the direction of the gesture, two points along the path of the gesture are utilized to determine a vector that describes the direction. The two points that are utilized may be points separated by a predetermined, or minimum distance, or may be two points taken at two different times. The direction of the gesture as determined at 216 is compared to the previously determined direction of the gesture to determine when a change in direction has occurred. A change in direction may be determined when the direction of the gesture differs from the previously determined direction of th,e gesture by, for example, a threshold angle. Alternatively, a change in direction may be determined when the location of the touch is at some threshold distance from a line in the previously determined direction of the gesture.

When a change in direction is determined at 218, the feature at which the touch is located when the change occurs, is selected at 222. When a change in direction is not detected at 218, the process continues at 210 without selecting a feature.

Based on the location of the touch and based on the direction, selectable features that are displayed on the touch-sensitive display 118 are again identified at 210. As described, the selectable features identified may be, for example, features that lie in the direction, beginning at the location of the touch at the time the direction is determined. Features that are located behind the location of the touch at the time the direction is determined, or in the opposite direction, are not identified. Features that are not identified are displayed at a default size.

The size of each identified feature may be increased at 212 based on the distance between the identified feature and the location of the touch. For example, the increase in size may be greater for features that are nearer to the location of touch. As the gesture continues, the size of the features may be adjusted dynamically to increase the size of features as the distance between the features and the location of touch decreases. Thus, the size of the identified features may differ depending on distance to the location of touch. As the gesture continues along a path, selectable features that were previously identified and for which the size was previously increased, are returned to their default size when the features are no longer identified.

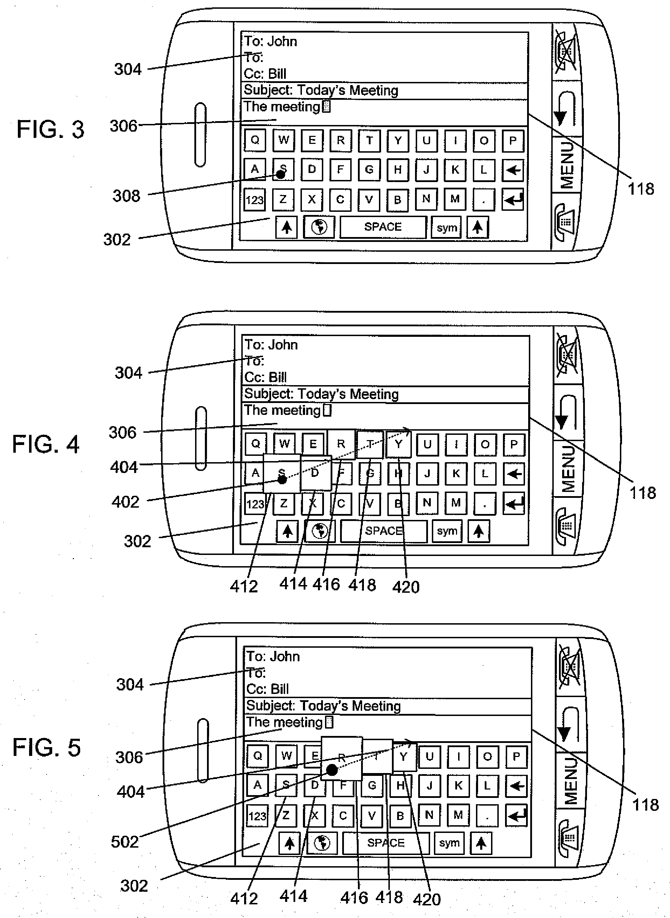

Examples of a touch-sensitive display illustrating selectable features are shown in FIG. 3 through FIG. 6. For the purpose of the present examples, the electronic device 100 is shown in the process of composing email in an email application. In these examples, keys are displayed in a virtual QWERTY keyboard 302 in the email application at 202. Each of the keys appears to be separated from the other keys in that the displayed representation of the keys do not share displayed boundaries. For the purpose of these examples, the target area for each key is equal to the displayed representation of the key.

Information including a header 304 and a body 306 of the email being composed is shown above the keyboard 302 in the orientation illustrated. A cursor is located within the body 306 of the email for adding characters in the example of FIG. 3. Prior to the start of a gesture, the keys of the keyboard 302 are displayed at their default size at 202.

A gesture begins at FIG. 3 at the origin point 308 illustrated by the black circle. The selectable feature associated with the origin point of the gesture, which in this example is a key 412 associated with the letter "S", is selected at 206.

A direction of the gesture is determined at 208 utilizing, for example, the origin point and a subsequent location 402 along the path of the gesture. The direction of the gesture is illustrated by the arrow 404. Based on the location 402 of the touch at the time the direction is determined and based on the direction 404, selectable features that are displayed on the touch-sensitive display 118 are identified at 210. In the present example, the selectable features that lie in the direction 404, beginning at the most recently determined location 402 of the touch and ending at a boundary of the keyboard 302 are Identified. These selectable features Include the keys 412, 414, 416, 418, 420 associated with the alphabetical letters "S", "D", "R", "T", and "Y", respectively.

The size of the identified features is increased at 212 by increasing both the displayed size and the target size. The size of the each identified feature is increased based on the distance between the identified feature and the location of the touch. The increase in size of the key 412 associated with the letter "S" is greater than the Increase in size of any of the other identified keys 414, 416, 418, 420 as the touch 402 is located on the key 412 associated with the letter "S". The increase In size of the key 420 associated with the letter "Y" is less than the increase in size of the other identified keys 412, 414, 416, 418, as the key 420 is located the farthest from the touch 402. The increase In size of the keys 414, 416, and 418 varies based on the distance of each of the keys 414, 416, and 418 to the touch 402.

The gesture continues at 214 and a new location 502 is utilized to determine the direction at 216. The direction has not changed at 218 and the process continues at 210 wherein the features are identified based on the direction 404.

Based on the location 502 of the touch at the time the direction Is determined and based on the direction 404, selectable features that are displayed on the touch-sensitive display 118 are again identified at 210. In the present example, the selectable features that lie in the direction 404, beginning at the most recently determined location 502 of the touch and ending at a boundary of the keyboard 302, are Identified. These selectable features include the keys 416, 418, 420 associated with the alphabetical letters "R", "T", and "Y", respectively. The keys 412, 414 are no longer identified and are therefore displayed at their default sizes.

The size of the identified features is increased at 212 by Increasing both the displayed size and the target size. The increase in size of the key 416 associated with the letter "R" is greater than the increase in size of the other identified keys 418, 420 as the touch 502 is located on the key 416 associated with the letter "R". The Increase in size of the key 420 associated with the letter "Y" is less than the increase In size of the identified keys 416, 418, as the key 420 is located the farthest from the touch 502.

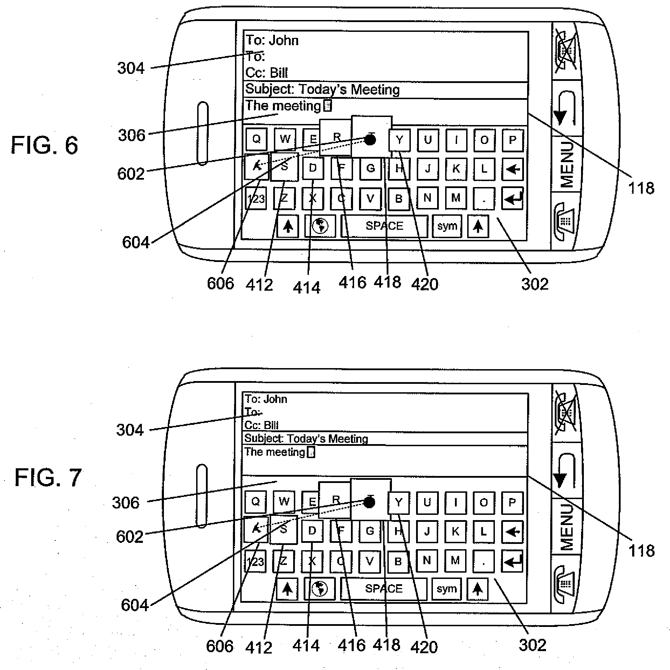

Continuing with the example illustrated and described with reference to FIG. 3 though FIG. 5, the gesture continues In the direction 404, and a change in direction is determined when the location of touch Is at 602. The direction 604 of the gesture Is Illustrated by the arrow in FIG. 6. When the change in direction is detected at 218, the key 418 associated with the letter "T" is selected at 222 and the selectable features are identified based on the location of the touch 602 and the direction 604. The selectable features that are identified include the keys 418, 416, 412, 606 associated with the alphabetical letters "T", "R", "S", and "A", respectively. The remainder of the keys are displayed at their default sizes.

In the example illustrated in FIG. 6, the size of the keys of the keyboard increases and at least some of the keys 418, 416, associated with the alphabetical letters "T" and "R" overlap the body 306 of the email, which is adjacent to the keyboard 302. The remaining selectable features that are not identified at 208 are displayed at their default size(s). The keys 418, 416 that overlap the body 306 of the email are illustrated as being opaque in FIG. 6. Optionally, keys that overlap the adjacent area, which in these examples, is a body 306 of the email, may be illustrated as translucent or transparent.

Alternatively, the header 304 and the body 306 of the email may be resized as the area of the keyboard 302 is increased to accommodate the increase in size of the keys. In the example illustrated in FIG. 7, the header 304 and the body 306 of the email are reduced and a smaller font size is utilized to decrease the header 304 and the body 306 and to increase the area of the keyboard 302.

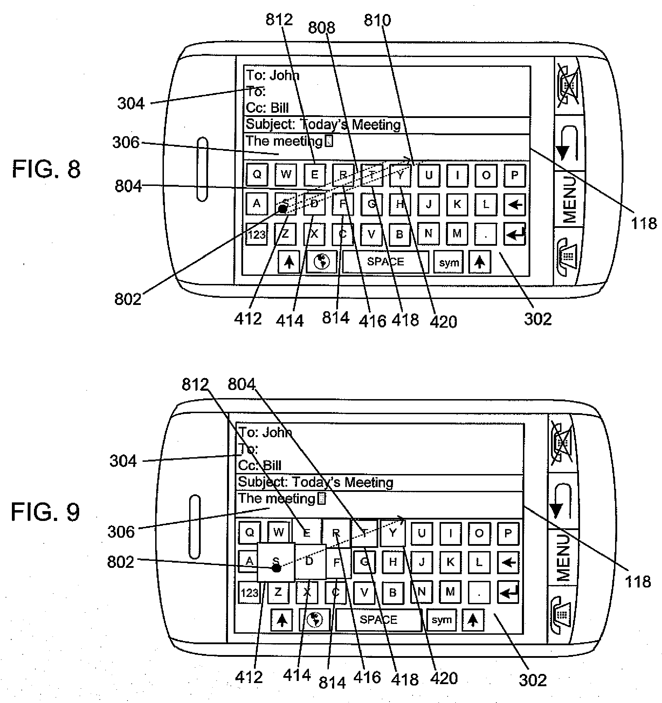

Another example of a portable electronic device 100 including a touch-sensitive display 118 is illustrated in FIG. 8 and FIG. 9. Again, for the purpose of the present example, the portable electronic device 100 is shown in the process of composing an email in an email application. Prior to the start of a gesture, the keys of the keyboard 302 are displayed at their default size at 202.

A gesture is detected at 204. The gesture begins at an origin point and the selectable feature associated with the origin point of the gesture, which in this exampfe is a key 412 associated with the letter "S", is selected at 206.

A direction of the gesture is determined at 208 utilizing, for example, the origin point and a subsequent location 802 along the path of the gesture. The direction of the gesture is illustrated by the arrow 804. Based on the location 802 of the touch at the time the direction is determined and based on the direction 804, selectable features that are displayed on the touch-sensitive display 118 are identified at 210. In the present example, the selectable features that lie within a threshold distance of the line of the direction 804, beginning at the most recently determined location 802 of the touch and ending at the boundary of the keyboard 302 are identified. The threshold distance from the line illustrating direction 804 in FIG. 8, is illustrated by parallel lines 808, 810 on each side of the direction 804. The threshold distance may be a preset distance or may be set based on, for example, size of a contact area of the gesture with the touch-sensitive display 118. Selectable features that lie between or that include parts that lie between the parallel lines are identified at 210.

As in the example described above with reference to FIG. 4, the selectable features identified in the present example include the keys 412, 414, 416, 418, 420 associated with the alphabetical letters "S", "D", "R", "T", and "Y", respectively. Additionally, the keys 812 and 814 associated with the letters "E" and "F", respectively are identified in the present example.

The size of the identified features is increased at 212 by increasing both the displayed size and the target size. The size of the each identified feature is increased based on the distance between the identified feature and the location of the touch. The increase in size of the keys 412, 414, 416, 418, 420, 812, 814 varies based on the distance of each of the keys to the touch 802.

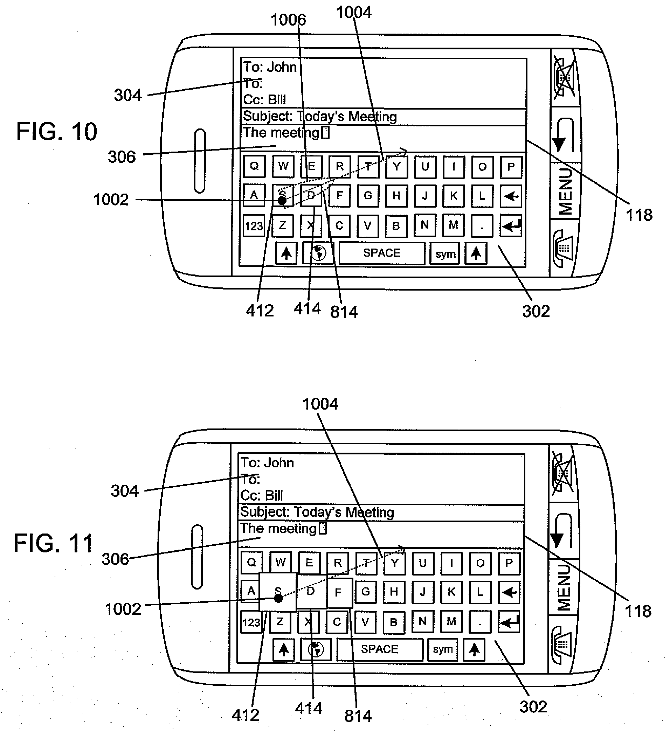

Another example of a portable electronic device 100 including a touch-sensitive display 118 is illustrated in FIG. 10 and FIG. 11. Again, for the purpose of the present example, the portable electronic device 100 is shown in the process of composing email in an email application. Prior to the start of a gesture, the keys of the keyboard 302 are displayed at their default size at 202.

A gesture is detected at 204. The gesture begins at an origin point and the selectable feature associated with the origin point of the gesture, which in this example is the key 412 associated with the letter "S", is selected at 206.

A direction of the gesture is determined at 208 utilizing, for example, the origin point and a subsequent location 1002 along the path of the gesture. The direction of the gesture is illustrated by the arrow 1004. Based on the location 1002 of the touch at the time the direction is determined and based on the direction 1004, selectable features that are displayed on the touch-sensitive display 118 are identified at 210. In the present example, the selectable features that lie within a partial ellipse 1006 determined by the location 1002 of the touch and whose major axis lies in the direction 1004, are identified. The lengths of the axes of the ellipse may be any suitable lengths and may be preset or set based on a factor or factors such as a the area of contact of the touch with the touch-sensitive display 118. A partial ellipse is provided as one example and other suitable shapes, such as a rectangle, may be utilized.

Selectable features that lie within the partial ellipse or that include a part that lies within the partial ellipse, are identified at 210. The selectable features identified in the present example include the keys 412, 414, 814 associated with the letters "S", "D", and "F", respectively. The size of the identified features is increased at 212. The size of the each identified feature may be increased based on the distance between the identified feature and the location of the touch.

In the examples provided, the selectable features are keys of a keyboard in an email application interface. The email application interface is illustrated to provide an example. The present disclosure is not limited to an email application interface as selectable features such as keys of a keyboard may be provided in, for example, a Web browser application, a calendar application, an address book application, a GPS navigation application, or any other suitable application. Further, other selectable features may be utilized including, for example, other keyboards such as an AZERTY keyboard or QWERTZ keyboard. Optionally, the displayed representations of selectable features may be round or any other suitable shape.

A method of controlling a portable electronic device includes displaying selectable features on a touch-sensitive display of a portable electronic device, detecting a gesture on the touch-sensitive display, identifying at least one of the selectable features based on a direction of the gesture, and increasing a size of the at least one of the selectable features.

A computer-readable medium has computer-readable code embodied therein. The computer-readable code is executable by at least one processor of a portable electronic device to perform the method.

A portable electronic device includes a touch-sensitive display and a processor coupled to the touch-sensitive display to detect a gesture on the touch-sensitive display, Identify a displayed selectable feature based on the direction of the gesture, and Increase a size of the displayed selectable feature.

Sizes of selectable features may be increased in a direction of a gesture, for example, during swipe typing on a touch-sensitive display. Thus, a user slides a finger or thumb along the keyboard, the direction of the gesture is determined and keys that in the direction of movement are increased in size. The increase In feature size facilitates identification of the selectable feature during the gesture and facilitates selection, thereby providing an improved interface that facilitates device use.

The present disclosure may be embodied in other specific forms without departing from its scope as defined by the appended claims. The described embodiments are to be considered in all respects only as illustrative and not restrictive. The scope of the present disclosure is, therefore, indicated by the appended claims rather than by the foregoing description.

## Claims

1. A method comprising:
displaying (202) selectable features on a touch-sensitive display (118) of a portable electronic device (100), each of the selectable features having a respective size; detecting (204) a swipe gesture performed on the touch-sensitive display (118) by a touch object;
determining (208) a direction (804) of the swipe gesture;
identifying (210) a plurality of the selectable features in the direction of the swipe gesture, wherein the identified plurality of selectable features comprise the selectable features that are within a threshold distance from a line beginning at a touch location (802) determined at the time the direction of the swipe gestures is determined and extending in the determined direction of the swipe gesture, wherein the threshold distance depends on the size of an area contacted on the touch-sensitive display by the touch object with which the swipe gesture is performed;
increasing (212) the size of each of the identified plurality of selectable features,
wherein the size of each of the identified plurality of selectable features is increased in proportion to the distance between a location of the swipe gesture on the touch-sensitive display (118) and each of the identified plurality of selectable features; and
selecting (220, 222) one of the selectable features based on one of an end location of the swipe gesture on the touch-sensitive display (118) and a change in direction of the swipe gesture on the touch-sensitive display (118).

2. The method according to claim 1, wherein increasing the size comprises increasing the displayed area of each of the plurality of the selectable features identified.

3. The method according to claim 1, wherein the selectable features comprise keys of a keyboard.

4. The method according to claim 1, comprising repeatedly performing the step (210) of identifying a plurality of the selectable features based on the direction and the location of the swipe gesture on the touch-sensitive display (118) to dynamically adjust the sizes of the plurality of selectable features identified.

5. The method according to claim 4, wherein the size of each of the plurality of selectable features identified increases dynamically with decreasing distance between the location of the swipe gesture on the touch-sensitive display (118) and the respective one of the plurality of selectable features identified.

6. The method according to claim 1, wherein the selectable features are displayed in a first area of the touch-sensitive display (118) and the size of at least one of the plurality of the selectable features identified increases to overlap a second area of the touch-sensitive display (118).

7. The method according to claim 1, wherein the selectable features are displayed in a first area of the touch-sensitive display (118) and the size of the first area is increased to accommodate the increase in size of at least one of the plurality of the selectable features identified.

8. A computer-readable medium having computer-readable code executable by at least one processor (102) of a portable electronic device (100) comprising a touch-sensitive display (118) to perform the method of any one of claims 1 to 7.

9. A portable electronic device (100) comprising:
a touch-sensitive display (118); and
a processor (102) coupled to the touch-sensitive display (118) to perform the method of any one of claims 1 to 7.

## Patentansprüche

1. Verfahren, das Folgendes umfasst:
Anzeigen (202) von auswählbaren Merkmalen auf einer berührungsempfindlichen Anzeige (118) einer tragbaren elektronischen Vorrichtung (100), wobei jedes der auswählbaren Merkmale eine jeweilige Größe aufweist;
Detektieren (204) einer Wischgeste, die auf der berührungsempfindlichen Anzeige (118) durch ein Berührungsobjekt durchgeführt wird;
Bestimmen (208) einer Richtung (804) der Wischgeste;
Identifizieren (210) mehrerer der auswählbaren Merkmale in der Richtung der Wischgeste, wobei die identifizierten mehreren auswählbaren Merkmale die auswählbaren Merkmale umfassen, die innerhalb eines Schwellenabstands von einer Linie liegen, die an einer Berührungsposition (802), die zu der Zeit bestimmt wird, zu der die Richtung der Wischgeste bestimmt wird, beginnt und sich in die bestimmte Richtung der Wischgeste erstreckt, wobei der Schwellenabstand von der Größe eines Bereichs abhängt, der auf der berührungsempfindlichen Anzeige durch das Berührungsobjekt, mit dem die Wischgeste durchgeführt wird, kontaktiert wird;
Vergrößern (212) der Größe jedes der identifizierten mehreren auswählbaren Merkmale, wobei die Größe jedes der identifizierten mehreren auswählbaren Merkmale proportional zum Abstand zwischen einer Position der Wischgeste auf der berührungsempfindlichen Anzeige (118) und jedem der identifizierten mehreren auswählbaren Merkmale vergrößert wird; und
Auswählen (220, 222) eines der auswählbaren Merkmale basierend auf einer Endposition der Wischgeste auf der berührungsempfindlichen Anzeige (118) oder einer Richtungsänderung der Wischgeste auf der berührungsempfindlichen Anzeige (118).

2. Verfahren nach Anspruch 1, wobei das Vergrößern der Größe ein Vergrößern des angezeigten Bereichs jedes der identifizierten mehreren auswählbaren Merkmale umfasst.

3. Verfahren nach Anspruch 1, wobei die auswählbaren Merkmale Tasten einer Tastatur umfassen.

4. Verfahren nach Anspruch 1, das ein wiederholtes Durchführen des Schritts (210) des Identifizierens mehrerer der auswählbaren Merkmale basierend auf der Richtung und der Position der Wischgeste auf der berührungsempfindlichen Anzeige (118) umfasst, um die Größen der identifizierten mehreren auswählbaren Merkmale dynamisch anzupassen.

5. Verfahren nach Anspruch 4, wobei sich die Größe jedes der identifizierten mehreren auswählbaren Merkmale mit einem Verkleinern des Abstands zwischen der Position der Wischgeste auf der berührungsempfindlichen Anzeige (118) und dem jeweiligen der identifizierten mehreren auswählbaren Merkmale dynamisch vergrößert.

6. Verfahren nach Anspruch 1, wobei die auswählbaren Merkmale in einem ersten Bereich der berührungsempfindlichen Anzeige (118) angezeigt werden und sich die Größe von mindestens einem der identifizierten mehreren auswählbaren Merkmale vergrößert, sodass ein zweiter Bereich der berührungsempfindlichen Anzeige (118) überlappt wird.

7. Verfahren nach Anspruch 1, wobei die auswählbaren Merkmale in einem ersten Bereich der berührungsempfindlichen Anzeige (118) angezeigt werden und die Größe des ersten Bereichs vergrößert wird, um der Vergrößerung in der Größe von mindestens einem der identifizierten mehreren auswählbaren Merkmale entgegenzukommen.

8. Computerlesbares Medium mit computerlesbarem Code, der durch mindestens einen Prozessor (102) einer tragbaren elektronischen Vorrichtung (100), die eine berührungsempfindliche Anzeige (118) umfasst, ausgeführt werden kann, um das Verfahren nach einem der Ansprüche 1 bis 7 durchzuführen.

9. Tragbare elektronische Vorrichtung (100), die Folgendes umfasst:
eine berührungsempfindliche Anzeige (118) und
einen Prozessor (102), der mit der berührungsempfindlichen Anzeige (118) gekoppelt ist, um das Verfahren nach einem der Ansprüche 1 bis 7 durchzuführen.

## Revendications

1. Procédé comprenant les étapes consistant à :
afficher (202) des caractéristiques sélectionnables sur un écran tactile (118) d'un dispositif électronique portable (100), chacune des caractéristiques sélectionnables ayant une dimension respective ;
détecter (204) un geste de balayage effectué sur l'écran tactile (118) par un objet de toucher ;
déterminer (208) une direction (804) du geste de balayage ;
identifier (210) une pluralité des caractéristiques sélectionnables dans la direction du geste de balayage, la pluralité identifiée de caractéristiques sélectionnables comprenant les caractéristiques sélectionnables qui sont situées dans les limites d'une distance seuil à partir d'une ligne commençant à un emplacement de toucher (802) déterminé au moment où la direction des gestes de balayage est déterminée et s'étendant dans la direction déterminée du geste de balayage, la distance seuil étant fonction de la dimension d'une zone contactée sur l'écran tactile par l'objet de toucher au moyen duquel le geste de balayage est effectué ;
augmenter (212) la dimension de chaque caractéristique de la pluralité identifiée de caractéristiques sélectionnables, la dimension de chaque caractéristique de la pluralité identifiée de caractéristiques sélectionnables étant augmentée proportionnellement à la distance entre un emplacement du geste de balayage sur l'écran tactile (118) et chaque caractéristique de la pluralité identifiée de caractéristiques sélectionnables ; et
sélectionner (220, 222) une des caractéristiques sélectionnables sur la base d'un des éléments parmi un emplacement de fin du geste de balayage sur l'écran tactile (118) et un changement de direction du geste de balayage sur l'écran tactile (118).

2. Procédé selon la revendication 1, dans lequel l'augmentation de la dimension comprend l'augmentation de la zone affichée de chaque caractéristique de la pluralité identifiée de caractéristiques sélectionnables.

3. Procédé selon la revendication 1, dans lequel les caractéristiques sélectionnables comprennent les touches d'un clavier.

4. Procédé selon la revendication 1, comprenant, l'exécution, de manière répétée, de l'étape (210) consistant à identifier une pluralité des caractéristiques sélectionnables sur la base de la direction et de l'emplacement du geste de balayage sur l'écran tactile (118) afin d'ajuster dynamiquement les dimensions de la pluralité identifiée de caractéristiques sélectionnables.

5. Procédé selon la revendication 4, dans lequel la dimension de chaque caractéristique de la pluralité identifiée de caractéristiques sélectionnables augmente dynamiquement avec la réduction de la distance entre l'emplacement du geste de balayage sur l'écran tactile (118) et la caractéristique respective de la pluralité identifiée de caractéristiques sélectionnables.

6. Procédé selon la revendication 1, dans lequel les caractéristiques sélectionnables sont affichées dans une première zone de l'écran tactile (118) et la dimension d'au moins une caractéristique de la pluralité identifiée de caractéristiques sélectionnables augmente pour chevaucher une seconde zone de l'écran tactile (118).

7. Procédé selon la revendication 1, dans lequel les caractéristiques sélectionnables sont affichées dans une première zone de l'écran tactile (118) et la dimension de la première zone est augmentée pour s'adapter à l'augmentation de dimension d'au moins une caractéristique de la pluralité identifiée de caractéristiques sélectionnables.

8. Support pouvant être lu par ordinateur comportant un code pouvant être lu par ordinateur, exécutable par au moins un processeur (102) d'un dispositif électronique portable (100) comprenant un écran tactile (118) pour mettre en oeuvre le procédé selon l'une quelconque des revendications 1 à 7.

9. Dispositif électronique portable (100) comprenant :
un écran tactile (118) ; et
un processeur (102) couplé à l'écran tactile (118) pour mettre en oeuvre le procédé selon l'une quelconque des revendications 1 à 7.
